# EUROPEAN PATENT APPLICATION

(11) **EP 1 282 332 A2**
(43) Date of publication of application: **05.02.2003**
(21) Application number: 02011776.8
(22) Date of filing: 27.05.2002
(51) Int. Cl.: H04R 1/02, B60R 11/02

(54) **Bracket for mounting speaker**

(30) Priority: 26.07.2001 JP 2001226765
(71) Applicant: Takehiro Co., Ltd., Anjou-shi, Aichi 444-1296 (JP); Nagase & Co., Ltd., Osaka-shi, Osaka 550-8668 (JP)
(72) Inventor: Iinuma, Satoshi, Anjou-shi, Aichi 444-1296 (JP); Suzuki, Kazuya, Anjou-shi, Aichi 444-1296 (JP); Tanaka, Kenichi, c/o Nagase & Co., Ltd., Nagoya-shi, Aichi 460-8560 (JP)
(74) Representative: Leson, Thomas Johannes Alois, Dipl.-Ing.

(57) **Abstract**

The present invention provides a bracket for mounting a speaker that allows a speaker to be easily mounted and removed without impairing the acoustic characteristics of the speaker used for a specific use such as car audio equipment, and that can reduce the possibility of the speaker being damaged during mounting or removal. The bracket of the present invention includes a base plate; and a plurality of hooks that are provided on one face of the base plate and can engage with a part of an edge of a speaker frame in cooperation with a mounting member from the back of the speaker.

## Description

### BACKGROUND OF THE INVENTION

### 1. Field of the Invention

The present invention relates to a bracket for mounting a speaker. In particular, the present invention relates to a bracket for mounting a speaker that allows a speaker to be mounted and removed easily without damaging the speaker itself.

### 2. Description of the Related Art

Conventionally, audio equipment has been under in-depth development in order to improve sound quality. The acoustic characteristics of a speaker are among the characteristics of audio equipment that are required to be better.

For example, in the field of home audio equipment, an enclosure usually provided together with a baffle plate has been improved for better acoustic characteristics of a speaker. The enclosure is used to prevent the deterioration of the acoustic characteristics due to the interference of sound from the front and back of a speaker by enclosing the sounds radiated from the back of the speaker.

On the other hand, in the field of car audio equipment, it is comparatively difficult to achieve acoustic characteristics equal to those of home audio equipment by using an enclosure, in view of the size of the car and the trend towards a smaller weight of a car. As an alternative, a rear speaker used in car audio equipment is constituted such that the trunk room serves as the enclosure by penetrating the back face of the rear speaker into the trunk room. However, since the volume of space in the trunk room varies with the amount of loads accommodated in the trunk room, it is not possible to make the acoustic characteristics of the rear speaker constant.

In speakers used in car audio equipment, higher durability is required than that required for home audio equipment. For example, in summer, the temperature in the inside of a car under sunshine may increase up to the vicinity of 90°C, whereas in winter, the temperature may decrease to below zero. In addition, if a speaker is provided in a door trim, the shoes of a passenger, which may be wet because of rain or the like, may touch the speaker. In order to prevent operation failure and/or sound quality deterioration of the speaker from such conditions, speakers for car audio equipment should have excellent durability such as heat resistance, moisture resistance, and water-repelling properties.

Furthermore, in recent years, cars are becoming lighter and accessories are becoming more compact to ensure more space of interior, and with these trends, there is a demand for improvement in the performance of speakers. For example, it is important to set the sound pressure characteristics for each channel of the speakers provided in the front, the center and the rear independently in order to reduce the difference in the acoustic characteristics, which depend on the position where the passengers are seated.

From this viewpoint, in the field of car audio equipment, speakers that are totally different from those for home audio equipment have been developed separately. As a result, car audio speakers that satisfy these requirements have excellent durability, but are inevitably rather expensive.

In a car audio speaker system, 2 to 10 speakers, such as a tweeter and a woofer, depending on the acoustic characteristics, are provided on specific interior components such as the door trim, the instrumental panel, and the rear tray of a car. Each speaker provided in these places is fixed, usually with screws or an adhesive. However, if the speakers are fixed in this manner, mounting and removal are cumbersome, the work efficiency is low, or the speaker itself may be damaged, when repairing or exchanging the interior components after an accident. Also when recycling the components of a wasted car, removal takes much time, which cannot provide sufficient satisfaction.

### SUMMARY OF THE INVENTION

The present invention provides a bracket for mounting a speaker that allows a speaker used for a specific use such as car audio equipment to be easily mounted and removed without impairing the acoustic characteristics of the speaker, and that can reduce the possibility of the speaker being damaged during mounting or removal.

A bracket of the present invention includes a base plate; and a plurality of hooks that are provided on one face of a base plate and can engage with a part of an edge of a speaker frame in cooperation with a mounting member from the back of the speaker.

In one embodiment of the present invention, the plurality of hooks are provided on the base plate at equal intervals.

In one embodiment of the present invention, the speaker is selected from the group consisting of a cone-shaped speaker, a flat panel shaped loudspeaker system and a transducer speaker.

In one embodiment of the present invention, the cone-shaped speaker is selected from the group consisting of a curved cone-shaped speaker, a flat cone-shaped speaker, a double cone-shaped speaker, an opry cone shaped speaker and a parabolic cone-shaped speaker.

In one embodiment of the present invention, the flat panel shaped loudspeaker system is selected from the group consisting of a Brat Harrah shaped speaker, a Gamuzon shaped speaker and a single Gamuzon shaped speaker.

The present invention also provides a method for mounting a speaker on a mounting member, which comprises:
placing the speaker between the mounting member and a bracket which comprises a base plate and a plurality of hooks so that the plurality of hooks and the mounting member can face each other and the base plate can support a part of an edge of a speaker frame; and
penetrating the plurality of hooks into holes provided in the mounting member.

In one embodiment of the method of the present invention, the plurality of hooks are provided on the base plate at equal intervals.

In one embodiment of the method of the present invention, the speaker is selected from the group consisting of a cone-shaped speaker, a flat panel shaped loudspeaker system and a transducer speaker.

In one embodiment of the method of the present invention, the cone-shaped speaker is selected from the group consisting of a curved cone-shaped speaker, a flat cone-shaped speaker, a double cone-shaped speaker, an opry cone shaped speaker and a parabolic cone-shaped speaker.

In one embodiment of the method of the present invention, the flat panel shaped loudspeaker system is selected from the group consisting of a Brat Harrah shaped speaker, a Gamuzon shaped speaker and a single Gamuzon shaped speaker.

Using the bracket of the present invention, a speaker can easily be mounted on a mounting member constituting a rear tray or the like. The speaker is fixed simply by engaging with the projections of the hooks of the bracket of the present invention. Therefore, the speaker can be mounted or removed in a short time in repair or exchange, and damaging the speaker itself can be avoided. Furthermore, since the speaker can be removed in a very simple manner, the components can be recycled very easily.

These and other advantages of the present invention will become apparent to those skilled in the art upon reading and understanding the following detailed description with reference to the accompanying figures.

### BRIEF DESCRIPTION OF THE DRAWINGS

Fig. 1 is a perspective view of a bracket illustrating an example of the bracket of the present invention;
Fig. 2 is a schematic cross-sectional view taken along line A-A of the bracket shown in Fig. 1;
Fig. 3 is a perspective view of a rear tray of a car in which a speaker is fixed by using the bracket of the present invention;
Fig. 4 (a) is a schematic cross-sectional view taken along line B-B of Fig. 3 illustrating the bracket of the present invention that is provided in a rear tray of a car and on which a speaker is mounted, in the case where a cone-shaped speaker is mounted; and
Fig. 4 (b) is a schematic cross-sectional view taken along line B-B of Fig. 3 illustrating the bracket of the present invention that is provided in a rear tray of a car and on which a speaker is mounted, in the case where a transducer speaker is mounted.

### DESCRIPTION OF THE PREFERRED EMBODIMENT

Hereinafter, the present invention will be described with reference to the accompanying drawings.

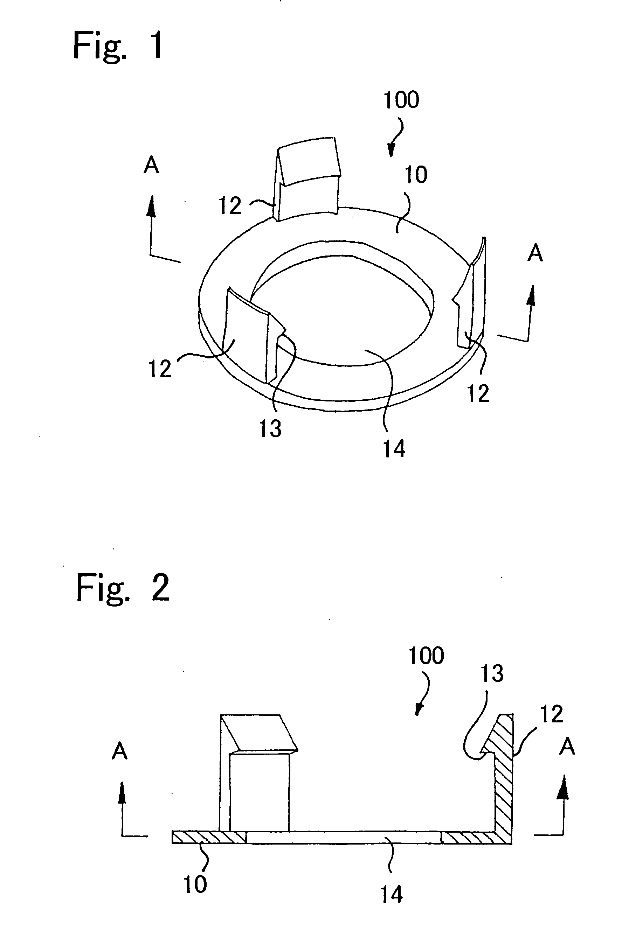

Fig. 1 is a perspective view of a bracket illustrating an example of the bracket of the present invention.

A bracket 100 of the present invention includes a base plate 10; and a plurality of hooks 12 that are provided on one face of the base plate 10 and can engage with a part of an edge of a speaker frame in cooperation with a mounting member from the back of the speaker. The base plate 10 is a flat plate and generally is designed to be larger than the shape of the speaker frame to be accommodated. The base plate 10 serves to support the speaker from its back as described later.

Fig. 2 is a cross-sectional view taken along line A-A of the bracket of the present invention shown in Fig. 1. As shown in Fig. 2, the hooks 12 are provided in the direction and perpendicularly to the base plate 10, and include, at their top, a projection 13 for engaging with the edge of the speaker frame from the back of the speaker. All the projections 13 are directed inward. There is no particular limitation on the number of the hooks 12 provided on the base plate 10, but it is preferable to provide 3 to 6 hooks in view of the stability of the fixed speaker. It is further preferable to provide the hooks 12 at equal intervals.

The base plate 10 of the bracket 100 of the present invention shown in Figs. 1 and 2 is formed as a separate member from the hooks 12, but the present invention is not limited to this configuration. That is to say, in the bracket of the present invention, the base plate and the hook can be formed into one member.

Furthermore, as shown in Fig. 2, the base plate 10 is provided with an opening 14 that is smaller than the frame portion of the speaker to be mounted. A speaker cable for connecting the speaker and external audio equipment passes through the opening 14, and the base plate 10 serves to support the speaker from its back as described later. For example, when mounting a cone-shaped speaker, the portion surrounding the opening 14 is engaged with the frame portion so that the speaker is fixed more stably.

The bracket of the present invention can be used for any speakers having a protruding portion (edge) that allows a part of the outer circumference of the speaker frame to be engaged with the hooks from the back of the speaker. Examples of speakers that can be mounted by using the bracket of the present invention include cone-shaped speakers and flat panel shaped loudspeaker systems, and transducer speakers used by being attached to a distribution mode sound radiator panel as disclosed in WO 97/09859 which is hereby incorporated by reference. Specific examples of cone-shaped speakers include speakers having curved cone-shapes, flat cone-shapes, double cone-shapes, opry cone-shapes (oblique cone-shapes) and parabolic cone-shapes. Specific examples of flat panel shaped loudspeaker systems include Brat Harrah shaped, Gamuzon shaped, and single Gamuzon shaped speakers.

The bracket of the present invention can be formed of a synthetic resin, a metal, a wood or a composite of these materials, although it is not limited thereto. Examples of synthetic resins include thermoplastic resins such as polypropylene, polyethylene, polystyrene, ABS, polyethylene terephthalate, and polyvinyl chloride; and thermosetting resins such as phenol resins. Examples of metals include stainless steel, aluminum and copper. Examples of woods include laminated woods. The bracket of the present invention can be produced by injection molding, vacuum molding, pressure forming, casting or cutting the above-described materials, using means known to those skilled in the art.

Next, the mounting of a speaker on a rear tray of a car by using the bracket of the present invention will be described.

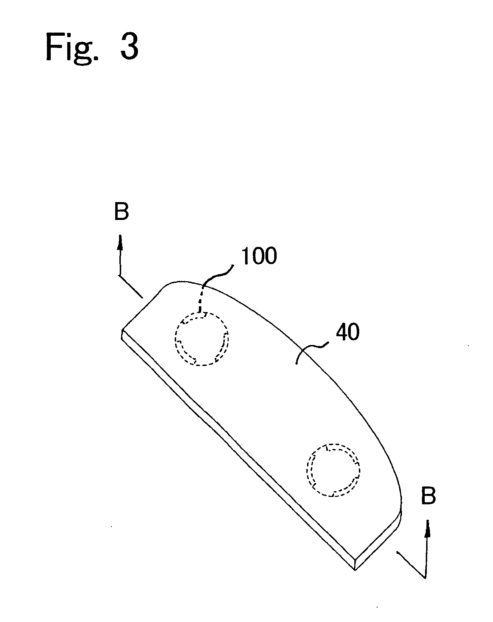

Fig. 3 is a perspective view of a rear tray of a car in which a speaker is fixed by using the bracket of the present invention. For example, the bracket 100 of the present invention is provided on an inner side of the rear tray 40 (back side of the drawing) in a position shown by the broken line in Fig. 3. There is no particular limitation regarding the mounting position of the bracket 100 in the rear tray 40, and the bracket 100 can be provided in a position that can improve the acoustic characteristics of the speaker in car audio equipment most effectively as known to those skilled in the art.

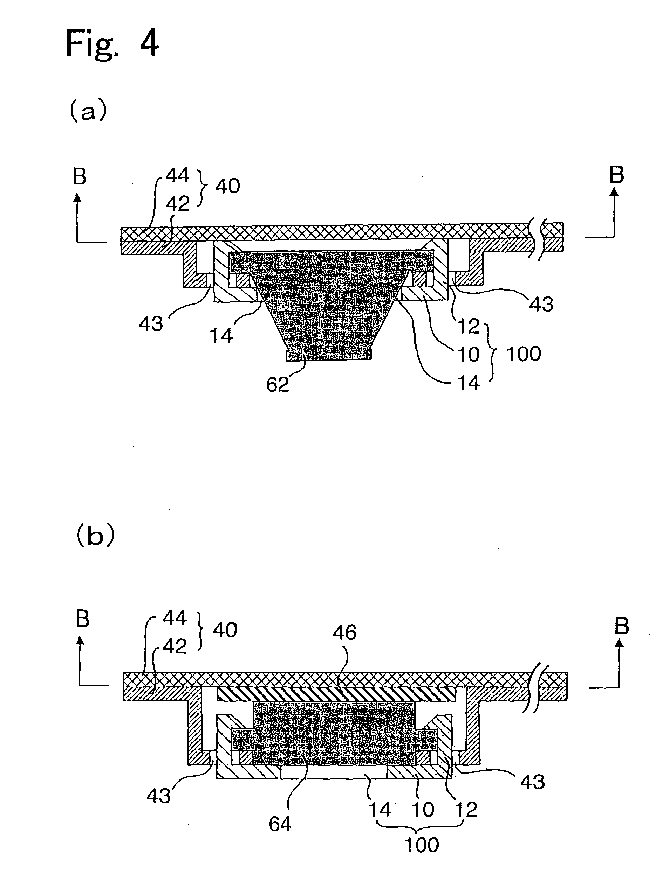

Figs. 4 (a) and 4 (b) are schematic cross-sectional views taken along line B-B of Fig. 3 illustrating the bracket of the present invention that is provided in a rear tray of a car and on which a speaker is mounted. Fig. 4 (a) shows the case where a cone-shaped speaker is mounted, and Fig. 4 (b) shows the case where a transducer speaker is mounted.

As shown in Fig. 4 (a), the hooks 12 of the bracket 100 of the present invention penetrate a hole 43 provided in a mounting member 42 (formed of a comparatively hard material such as polypropylene or kenaf) constituting the rear tray 40 from the back of a cone-shaped speaker 62 and the projections of the hooks 12 engage with the edge of the frame of the cone-shaped speaker 62. The opening 14 provided in the base plate 10 of the bracket 100 engages with the frame of the speaker 62 at the middle thereof. Thus, the cone-shaped speaker 62 can be fixed reliably by the bracket 100 of the present invention in cooperation with the mounting member 42 without using an adhesive, screws or other means.

The outer surface of the mounting member 42 may be covered with a covering member 44 formed in a thickness and of a material (e.g., synthetic resins such as polypropylene, fabrics, or leather) that hardly adversely affect the acoustic characteristics of the speaker. When the cone-shaped speaker is fixed, the covering member 44 may be a mesh or provided with multiple holes or slits in a position corresponding to the opening 14 of the bracket 100. In Fig. 4 (a), the rear tray 40 is made of a laminate including the mounting member 42 and the covering member 44, but it is not limited to this configuration. In other words, the rear tray 40 is not necessarily provided with the covering member, or another member made of a material that does not adversely affect the acoustic characteristics of the cone-shaped speaker can be laminated.

On the other hand, a transducer speaker is mounted in the following manner.

As shown in Fig. 4 (b), the hooks 12 of the bracket 100 of the present invention penetrate a hole 43 provided in a mounting member 42 (formed of a comparatively hard material such as polypropylene or kenaf as in the above case) constituting the rear tray 40 from the back of a transducer speaker 64 and the projections of the hook 12 engage with the edge of the frame of the transducer speaker 64. On the other hand, the base plate 10 of the bracket 100 is in contact with the back face of the speaker 64. Thus, the transducer speaker 64 can be fixed reliably by the bracket 100 of the present invention in cooperation with the mounting member 42 without using an adhesive, screws or other means. When a transducer speaker is used, a hard plate 46 (formed of synthetic resins such as polypropylene, ABS, or polyethylene terephthalate; metals such as stainless steel or aluminum; or woods such as laminated woods) that serves as a vibration board that is in contact with the front face of the speaker 64 is disposed by using an adhesive or the like, as shown in Fig. 4 (b).

The outer surface of the mounting member 42 may be covered with a covering member 44, as in the case of the mounting of the cone-shaped speaker. Alternatively, another member made of a material that does not adversely affect the acoustic characteristics of the transducer speaker can be laminated.

Thus, the speaker is easily fixed on the predetermined mounting member by using the bracket of the present invention. The present invention has been described by taking the car rear tray as an example of the member on which the speaker is mounted, but the present invention is not limited thereto, and can be used in any place in which the speaker is to be provided, such as the instrumental panel, the door trim, the pillar, a seat cushion, a back rest of a seat and the roof of a car; the screen of a movie theatre or a gallery; a partition set up in a meeting room or the like; a ceiling or a wall of an underground shopping center and the like.

The speaker mounted on the mounting member can be removed in the following manner, for example.

Referring to Fig. 4 (a) again, first, the covering member 44 is peeled from the rear tray 40. Then, the hooks 12 of the bracket 100 of the present invention are pressed apart by hand, so that the hooks 12 can be removed from the edge of the speaker frame. Thereafter, the bracket 100 is pulled so that the hooks 12 are removed from the hole 43 of the mounting member 42. Thus, the cone-shaped speaker 62 can be removed from the rear tray 40 very easily. Moreover, the transducer speaker shown in Fig. 4 (b) can be also very easily removed from the mounting member in the same manner as the case of the above cone-shaped speaker.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

The present invention provides a bracket for mounting a speaker that allows a speaker to be easily mounted and removed without impairing the acoustic characteristics of the speaker used for a specific use such as car audio equipment, and that can reduce the possibility of the speaker being damaged during mounting or removal. The bracket of the present invention includes a base plate; and a plurality of hooks that are provided on one face of the base plate and can engage with a part of an edge of a speaker frame in cooperation with a mounting member from the back of the speaker.

## Claims

1. A bracket for mounting a speaker comprising:
a base plate; and
a plurality of hooks that are provided on one face of the base plate and can engage with a part of an edge of a speaker frame in cooperation with a mounting member from a back of the speaker.

2. The bracket according to claim 1, wherein the plurality of hooks are provided on the base plate at equal intervals.

3. The bracket according to any of claim 1 or 2, wherein the speaker is selected from the group consisting of a cone-shaped speaker, a flat panel shaped loudspeaker system and a transducer speaker.

4. The bracket according to claim 3, wherein the cone-shaped speaker is selected from the group consisting of a curved cone-shaped speaker, a flat cone-shaped speaker, a double cone-shaped speaker, an opry cone shaped speaker and a parabolic cone-shaped speaker.

5. The bracket according to claim 3, wherein the flat panel shaped loudspeaker system is selected from the group consisting of a Brat Harrah shaped speaker, a Gamuzon shaped speaker and a single Gamuzon shaped speaker.

6. A method for mounting a speaker on a mounting member comprising:
placing the speaker between the mounting member and a bracket which comprises a base plate and a plurality of hooks so that the plurality of hooks and the mounting member can face each other and the base plate can support a part of an edge of a speaker frame; and
penetrating the plurality of hooks into holes provided in the mounting member.

7. The method according to claim 6, wherein the plurality of hooks are provided on the base plate at equal intervals.

8. The method according to any of claim 6 or 7, wherein the speaker is selected from the group consisting of a cone-shaped speaker, a flat panel shaped loudspeaker system and a transducer speaker.

9. The method according to claim 8, wherein the cone-shaped speaker is selected from the group consisting of a curved cone-shaped speaker, a flat cone-shaped speaker, a double cone-shaped speaker, an opry cone shaped speaker and a parabolic cone-shaped speaker.

10. The method according to claim 8, wherein the flat panel shaped loudspeaker system is selected from the group consisting of a Brat Harrah shaped speaker, a Gamuzon shaped speaker and a single Gamuzon shaped speaker.
